# EUROPEAN PATENT APPLICATION

(11) **EP 2 183 983 A2**
(43) Date of publication of application: **12.05.2010**
(21) Application number: 09252558.3
(22) Date of filing: 05.11.2009
(51) Int. Cl.: A23L 1/24, A23L 1/39, A23L 1/308

(54) **Pourable food composition with high natural fiber content and methods of production**

(30) Priority: 07.11.2008 US 266686
(71) Applicant: Kraft Foods Global Brands LLC, Northfield, IL 60093 (US)
(72) Inventor: Moca, Judith Guten, Palatine, IL 60067 (US); Silver, Richard Stuart, Wilmette, IL 60091 (US); Schwimmer, William Harold, Evanston, IL 60201 (US); Shah, Manoj, Lindenhurst, IL 60046 (US); Sass, Allen Phillip, Madison, WI 53703 (US); Li, Hong Laura, Morton Grove, IL 60053 (US); McPherson, Andrew E, Mount Prospect, IL 60056 (US); Nichols, Adrienne L, Fox Lake, IL 60020 (US)
(74) Representative: Setna, Rohan P.

(57) **Abstract**

The present invention relates to a pourable food composition, like a dressing, that has at least 2.5 grams of total dietary fiber per 32 gram serving. The fiber is derived from at least one whole fruit or vegetable that is partially or completely dehydrated and which is subjected only to minimal processing. The food composition has a viscosity of about 3,000 to about 12,500 centipoise. The fiber may be derived from whole vegetables that are high in fiber, such as beans, cannots, broccoli and the like. The fiber may also be derived from whole fruits that are high in fiber, such as avocados, mangos, and the like. The whole food is subject to only minimal processing, such as by physical means, enzymatic means, or by fermentative means.

## Description

### FIELD OF THE INVENTION

The present invention relates to a pourable food composition with high natural fiber content and method of producing same. More specifically, the invention is directed to a pourable food composition with at least 2.5 grams of total dietary fiber per 32 gram serving; the dietary fiber is obtained from whole foods such as fruits and vegetables.

### BACKGROUND OF THE INVENTION

Fiber is an important nutritional component of the human diet. Currently, nutritionists generally recommend the consumption of at least 25 grams per day of fiber. Such levels of fiber may contribute to gut health, heart health, cancer prevention, and avoidance of other health problems. However, it is estimated that in the average diet in the industrialized world, only about 10 grams per day of fiber is consumed. Consumers may avoid eating high-fiber containing foods (especially processed foods) because of perceived poor palatability, flavor and/or texture associated with such foods or simply because it may be difficult to identify such high fiber foods due to federal labeling requirements. Therefore, providing high-fiber foods which are appealing to consumers is desired.

Pourable salad dressings may be a good vehicle for delivering fiber to consumer's diets because such products are widely used and are typically consumed with other healthy foods. It is known that foods may be enhanced in fiber content by fortifying with relatively purified or extracted fiber ingredients such as cellulose powder, bran, citrus fiber, inulin and the like. However, current U.S. Food & Drug Administration ("FDA") regulations, limit the types of health claims that can be made when products such as salad dressings are fortified with purified sources of fiber since such fiber sources are not intrinsically found in nature. Without such labels pointing out and encouraging the use of such high fiber products, many consumers may not be aware that such choices are even available.

Formulating a salad dressing with suitable levels of natural whole high-fiber fruits and vegetables would provide a natural source of fiber as well as a way of conforming with the FDA regulations. Existing products either do not deliver the desired amount of fiber or have the consistency of a thick, non-pourable paste or both. A desirable amount of fiber would be at least 2.5 grams per single serving of dressing (*i.e.,* 32 grams), which would enable a "good source of fiber" product label claim in accordance with present FDA regulations.

The present invention overcomes these limitations of the prior art and enables the formulation of a highly palatable and easily pourable dressing which contains at least 2.5 grams of fiber per 32 gram serving where the fiber is contained in natural fruits and/or vegetables.

### SUMMARY OF THE INVENTION

The present invention relates to a pourable food composition, like a dressing, that has at least 2.5 grams of total dietary fiber per 32 gram serving. The fiber is derived from at least one whole fruit or vegetable that is partially or completely dehydrated and which is subjected only to minimal processing. The food composition must be pourable; and generally has an initial viscosity of about 3,000 to about 12,500 centipoise. The fiber may be derived from whole vegetables that are high in fiber, such as beans, carrots, broccoli and the like. The fiber may also be derived from whole fruits that are high in fiber, such as avocados, mangos, and the like. The whole food is subject to only minimal processing, such as by enzymatic means or fermentative means in order to reduce the viscosity impact on the finished pourable product (*i.e.,* so that the final product is, in fact, pourable). The whole fruit or vegetable may also be subject to minimal physical processing such as milling, vortex processing, thermal processing such as heating, cooling, freezing, or drying and dehydration by any usual method as a precursor or adjunct to enzymatic or fermentative processing.

The present invention also relates to a method of producing a pourable food composition with at least 2.5 grams of total dietary fiber per 32 gram serving and which remains pourable (e.g., a typical viscosity of about 3,000 to about 12,500 centipoises).

### DETAILED DESCRIPTION

The invention relates to pourable food compositions, like a pourable dressing, for example, and methods for producing such pourable food compositions. The present invention provides a pourable food composition that delivers an amount of fiber per serving with whole fruits or vegetables and which allows the pourable food composition to be labeled with a fiber related health claim under current FDA regulations.

The pourable food composition comprises at least 2.5 grams of total dietary fiber per 32 gram serving. The fiber is derived from at least one whole fruit or vegetable that is partially or completely dehydrated. Preferably, the whole fruit or whole vegetable, before minimal processing, is obtained in, or converted to, a dehydrated form having a moisture level of less than about 50%. More preferably, the whole fruit or whole vegetable, before minimal processing, is obtained in, or converted to, a dehydrated form having a moisture level of less than about 25%. Even more preferably, the whole fruit or vegetable, before minimal processing, is obtained in or converted to a dehydrated form having a moisture level of less than about 10%. Additionally, the whole fruit or whole vegetable, before minimal processing, is obtained in or coverted to a powdered form having an average particle size of less than about 500 microns.

The whole fruit or vegetable is subjected to only minimal processing. For purposes of this invention, "minimal processing" is processing by such means that the whole food is not significantly changed by either adding something not normally found in such whole food or by removing something normally found in such food to the extent that current FDA regulations would allow the "minimally processed whole food" to be labeled as natural. Of course, any physical means used to treat the whole fruits or vegetables in conjunction with the minimal processing enzymatic or fermentative methods, must also comply with the defined "minimal processing" criteria. The pourable food composition has an initial viscosity (without shear) of about 3,000 to about 12,500 centipoise.

The fiber may be derived from any whole fruit or vegetable with a high fiber content. The phrase "whole fruit or vegetable" means the entire edible portion of the fruit or vegetable, with nothing removed except moisture and nothing added except salt or sugar. The phrase "high fiber content" or "high fiber level" means that the whole fruit or vegetable contains, on a dry basis, at least 25% total dietary fiber, preferably at least 30% total dietary fiber, and more preferably at least 35% total dietary fiber. The fiber may be derived from whole vegetables that are high in fiber, such as beans, carrots, broccoli and the like. Beans are a preferred whole vegetable for purposes of this invention because many beans contain high fiber levels. Thus, many beans contain at least 25% total dietary fiber (on a dry basis) and some beans, such as lupin beans, contain an even higher amount (e.g., about 35% or more) total dietary fiber. The fiber may also be derived from whole fruits that are high in fiber, such as avocados, mangos, and the like.

The whole fruit or vegetable may only be subject to minimal processing, such as by enzymatic means or fermentative means. Additionally, the whole fruit or vegetable may be subject to minimal physical processing such as milling, vortex processing, thermal processing such as heating, cooling, freezing, or drying and dehydration by any usual method as a precursor or adjunct to enzymatic or fermentative processing. The whole fruit or vegetable may be subject to minimal enzymatic processing by treatment with enzymes such as proteases, amylases, cellulases, hemicellulases, mannanases, pectinases, and combinations thereof. The whole fruit or vegetable may be subject to minimal fermentative processing, such as fermentation, which produces *in situ* enzymes as listed above and/or improves the flavor of the dressing e.g., *Aspergillus oryzae koji culture* (amylase), *Lactobacillus helveticus* (LH32, Chr. Hansen; protease). The purpose of such minimal processing is to reduce the viscosity of the fiber-containing composition and thereby limit the effect of the fiber-containing composition on the viscosity of the finished food product.

The pourable composition may contain, and preferably does contain, additional ingredients normally used in pourable compositions, such as water, oil, spices, salt, sweetener, vinegar, and combinations thereof. When conventional partially or completely dehydrated fruits or vegetables are added to a typical base formula of pourable salad dressing in sufficient quantity to provide 2.5 gm fiber per 32 gram serving, the protein and digestible carbohydrates imbibe water and increase the viscosity of the mixture such that it becomes a non-pourable paste.

Although not wishing to be limited by theory, in the present invention, it is believed that the non-fiber components are hydrolyzed using enzymes such as proteases and amylases such that the viscosity of the final salad dressing is within a pourable range, *i.e.* below about 12,500 centipoises. Further, this is accomplished by treating the aqueous paste of such ingredients with enzymes to reduce the viscosity of the fiber-containing composition sufficiently such that the final composition is pourable without diminishing the fiber content of the final composition. The type of enzymes used and the extent of treatment or viscosity reduction required will depend on the composition of the whole vegetable or fruit as well as the composition of the final composition. Fermentation processes can produce hydrolytic enzymes *in-situ.* Physical processes such as drying and thermal processes can, at least in theory, decrease the ability of starch and protein to imbibe water by modifying crystallinity or "case hardening;" no evidence of such effects was, however, observed in the present work using only physical processes. It has, however, been found helpful to use such minimal physical processes in combination with the minimal processing enzymatic means or fermentative means described herein.

The present invention also relates to a method of producing a pourable food composition with at least 2.5 grams of total dietary fiber per 32 gram serving and an initial viscosity (without shear) of about 3,000 to about 12,500 centipoises. First, at least one whole fruit or vegetable is provided. The fiber may be derived from whole vegetables that are high in fiber, such as beans, carrots, broccoli and the like. Beans are a preferred whole vegetable for purposes of this invention because various types of beans contain at least 25% total dietary fiber (on a dry basis) and some beans, such as the lupin bean, contains about 35% total dietary fiber. The fiber may also be derived from whole fruits that are high in fiber, such as avocados, mangos, and the like.

The whole vegetable or fruit is treated using only minimal processing to create a minimally processed whole food. The whole fruit or vegetable may be subject to minimal physical processing such as milling, vortex processing, minimal thermal processing such as heating, cooling, freezing, or drying and dehydration by any usual method as a precursor or adjunct to enzymatic or fermentative processing. The whole fruit or vegetable may be subject to minimal enzymatic processing by treatment with enzymes such as proteases, amylases, cellulases, hemicellulases, mannanases, pectinases, and combinations thereof. The whole fruit or vegetable may be subject to minimal fermentative processing, such as fermentation, which produces *in situ* enzymes as listed above and/or improves the flavor of the dressing e.g., *Aspergillus oryzae koji culture* (amylase), *Lactobacillus helveticus* (LH32, Chr. Hansen) (protease). The fermentation may be carried out using an aqueous slurry of the fruit or vegetable prior to dehydration or may be done on a paste made of dry fruit or vegetable containing about 25-40% solids. These materials are inoculated with suitable microbial cultures and held at suitable temperature for about 4 to 164 hours, or a time sufficient for the culture to propagate and achieve the desired reduction in viscosity. The purpose of such minimal processing is to reduce the viscosity of the fiber-containing composition and thereby limit the effect of the fiber-containing composition on the viscosity of the finished food product.

The minimally processed whole food is formulated into a pourable food composition. Current federal regulations require that the source of claimable fiber be a whole food (not an extract or concentrate). The "minimal processing" applied to the whole fruit or vegetable reduces the viscosity while retaining the whole and natural quality of the ingredient. The enzymes required will depend, at least in part, on the relative amounts of starch and protein in the whole fruit or vegetable. For example, since lupin beans contain little starch, a protease alone is sufficient to reduce the viscosity and allow such a pourable composition to be prepared. Navy beans generally contain significant levels of starch as well as protein; thus both protease and amylase are required to achieve the desired viscosity in the final pourable composition. The whole fruits or vegetables may also contain cellulose, hemicellulose, mannan, pectin and the like. If the whole fruit or vegetable has 5% content of cellulose, hemicellulose, mannan, or pectin, and these fibers contributed significantly to viscosity, then other enzymes (*i.e.,* cellulases, hemicellulases, mannanases, pectinases), may be used. However, care must be taken if such enzymes (*i.e.,* cellulases, hemicellulases, mannanases, pectinases) are used that they do not hydrolyze fibrous components to the extent that they no longer assay as a fiber by conventional methods. Partial hydrolysis sufficient to reduce viscosity, but not sufficient to reduce fiber content is permissible (*i.e.,* maintaining hydrolytic fragments by degree of polymerization of at least three).

The minimally processed fruits or vegetables and the finished pourable dressings contain the minimally processed fruits or vegetables are typically non-Newtonian fluids (*i.e.,* pseudoplastic); thus, their viscosities are shear dependent. For purposes of this invention, viscosity is measured in a Brookfield RVT viscometer with a rotating cylinder (at a constant RPM) immersed in the composition; the torque required to maintain the constant rotation of the cylinder is measured. The first reading is taken just after the cylinder begins to rotate in the fluid; this is defined as the "initial viscosity." A second reading is taken after about one minute of rotation and is defined as the "viscosity with shear." Since these fluids are pseudoplastic, the initial viscosity is generally larger than the shear viscosity. Although both viscosity values are reported in the examples, the initial viscosity will, unless otherwise noted, be used to discuss and define the present invention. Thus, a reference to either viscosity (without any modifier) or initial viscosity is intended to refer to the initial viscosity.

The Examples that follow are intended to illustrate, and not to limit, the invention.

**Example 1:** Lupin bean is a most preferred vegetable for this invention since the fiber content is high, typically over 35%, and the starch content is low, about 3%. Therefore, viscosity of aqueous slurries of lupin bean powders can be reduced to acceptable levels using protease enzymes.

Commercially available food-grade protease enzymes were evaluated by treating an aqueous slurry of lupin bean powder containing from about 24% to 31.7% solids with about 0.1- 0.3% enzyme for 4 hours at temperature appropriate to the enzyme and measuring the viscosity reduction using a Brookfield RVT viscometer (spindle 6, 20 RPM at 20°C).

Lupin bean powders were made by grinding whole raw lupin beans in a Retsch benchtop mill (Retsch Inc., Newtown, PA) with about 25% dry ice added with the beans and a 0.5 mm screen used. Bean slurries (and salad dressings made from them) were found to be pseudoplastic with the viscosity decreasing with shearing over time; the initial viscosity and viscosity with shear (*i.e.*, taken one minute after the initial viscosity) were recorded. Essentially, all commercial proteases tested gave some viscosity reduction but some were more efficient than others.

Whole raw lupin beans were ground using dry ice as discussed above. The powdered formed was used to provide aqueous slurry (24% w/w). The aqueous slurry was treated with 0.167% enzyme as indicated in the following table at 40°C for four hours. The viscosities of the aqueous bean compositions are shown in the following table.

| **Enzyme** | **Initial Viscosity, cP** | **Viscosity with Shear, cP** |
|---|---|---|
| Control (no enzyme) | 11,650 | 8000 |
| Neutrase (Novozymes, Inc., Franklin, NC) | 5350 | 2800 |
| FPII (Valley Research, South Bend, IN) | 7500 | 2300 |
| Flavorzyme (Novozymes, Inc., Franklin, NC) | 9500 | 5300 |

**Example 2:** In this example, a commercial lupin bean powder (Faralup 400+, Lup'Ingredients, France) was used instead of whole raw lupin beans. An aqueous slurry (31.67% w/w) was treated with 0.1% enzyme (Alcalase 2.4 L) as indicated in the following table at 55°C for two hours and shaken at 150 RPM. The following results were obtained for the fluid compositions.

| **Enzyme** | **Initial Viscosity, cP** | **Viscosity with Shear, cP** |
|---|---|---|
| Control (no enzyme) | 12,800 | 5700 |
| Alcalase 2.4 L (Novozymes, Inc., Franklin, NC) | 4250 | 3400 |

**Example 3:** A 37.5% w/w aqueous slurry of commercial lupin bean powder (Faralup 400+) was treated with 0.1% Alcalase 2.4L for 4 hours at 55°C shaken at 100 RPM. After treatment, the slurry was acidified with 0.58% phosphoric acid (85%) and 7.65% vinegar (120 grain). A salad dressing was made by mixing 69.38 gm of the acidified bean slurry with 12 gm HFCS and 15 gm soybean oil in a blender. The initial viscosity of the dressing was 8650 cP and viscosity with shear was 6400 cP. The dressing poured easily. Such dressing contains in excess of 2.5 gm fiber per 32 gram serving.

**Example 4:** Pourable salad dressings were made from the control and enzyme-treated lupin bean powders in Example 2 above by mixing the following ingredients in a blender:

| **Ingredient** | **Weight Percent** |
|---|---|
| Lupin bean slurry | 72.5 |
| Soybean oil | 15 |
| Salt | 2 |
| Sucrose | 5 |
| Vinegar | 4 |
| Phosphoric acid (85%) | 0.4 |
| Water | 1.1 |

The viscosity of the dressings was measured as described in Example 1:

| **Enzyme** | **Initial Viscosity, cP** | **Viscosity with Shear, cP** |
|---|---|---|
| Control (no enzyme) | 19,300 | 14,900 |
| Alcalase 2.4 L (Novozymes, Inc., Franklin, NC) | 12,200 | 9250 |

It is noted that the enzyme-treated bean slurry produced a pourable dressing with considerably reduced viscosity compared to control yet contained over 2.5 gm fiber per 32 gram serving.

**Example 5:** Enzymatic treatment of pinto bean powder has shown to decrease viscosity when compared against untreated pinto beans. In this example, 16.5 g of pinto bean powder (ADM, Product no. 192001, Decatur, IL) was hand stirred into a solution of 95 ml of water and 5 ml of BAN 240L (Novozymes), then incubated at room temperature for an hour. The mixture was then incubated at 40°C for another hour. The viscosity of this mixture was measured at 15,360 cP using Brookfield viscometer (HB model, spindle #4, 20 rpm, 30 sec.) Adding 5 ml of Neutrase (Novozymes, Franklinton NC) enzyme to an identical bean powder mixture prepared under the same conditions reduced the viscosity to 8,640 cP. Furthermore, adding 5 g of AMG 800 (Novozymes) enzyme along with 5 ml of Neutrase enzyme to another identical bean powder mixture prepared under the same conditions reduced the viscosity to 6,160 cP.

**Example 6:** Milling Whole Navy Beans through vortex processing such as Tornado-in-a-Can (TIC; VDT LLC, Clinton, NC) technology demonstrated reduced particle size when compared against commercial navy bean powder (ADM, Decatur, IL). In applying LS Particle Size Analysis it was found that whole navy bean powders milled through TIC led to a mean particle size of 24.05 µm, with 90% of particles being less than 50.81 µm. The commercial navy bean powder possessed a mean particle size of 25.41 µm, 90% particles being less that 130.9 µm. Through informal sensory, a grittier mouthfeel could be detected with prepared bean powder when compared against vortex milled whole navy beans (both being in water solution at 16.67%). Informal sensory analysis also showed vortex milled whole navy beans to possess less "beany" notes when compared to commercial navy bean powder (both being in water solution at 16.67%). This process could be combined with the enzymatic treatment above to yield a deflavored ingredient for use in Pourable dressing formulation.

Water suspensions (5% w/w) of the TIC-milled navy bean powders and the commercial powder were prepared and tasted by a panel of expert flavorists. The panel judged that the TIC-milled suspensions were reduced in "beany" notes compared to the commercial bean powder suspension.

## Claims

1. A pourable dressing composition comprising at least 2.5 grams total fiber per single serving of the pourable dressing composition, wherein the total fiber is natural fiber derived from minimally processing at least one whole fruit or whole vegetable, wherein the whole fruit or whole vegetable, before minimally processing, contains at least about 25 percent fiber;
wherein the whole fruit or whole vegetable, before minimally processing, is obtained in, or converted to, (1) a dehydrated form and (2) a powdered form having an average particle size of less than about 500 microns;
wherein the dehydrated and powdered form of the whole fruit or vegetable is minimally processed using an enzymatic treatment to reduce the initial viscosity without shear to less than about 12,500 cP;
wherein the enzymatically treated whole fruit or vegetable is incorporated into a pourable dressing base composition to form the pourable dressing composition containing at least 2.5 grains total fiber per single serving of the pourable dressing composition; and
wherein the initial viscosity without shear of the pourable dressing composition containing the at least 2.5 grams total fiber per single serving of the pourable dressing composition is less than about 12500 cP.

2. The pourable dressing composition of claim 1, wherein the at least one whole vegetable is selected from the group consisting of beans, carrots, and broccoli.

3. The pourable dressing composition of claim 1, wherein the at least one whole fruit is selected from the group consisting of avocado and mango.

4. The pourable dressing composition according to any of the preceding claims,
wherein the at least one whole fruit or vegetable is minimally processed by physical means as a precursor or adjunct to enzymatic or fermentative processing.

5. The pourable dressing composition according to any of the preceding claims,
wherein the at least one whole fruit or vegetable is minimally processed solely by enzymatic means.

6. The pourable dressing composition according to any of the preceding claims,
wherein the at least one whole fruit or vegetable is minimally processed solely by fermentative means.

7. The pourable dressing composition according to any of the preceding claims, further comprising at least one of water, oil, spices, salt, sweetener, vinegar, and combinations thereof.

8. A pourable dressing composition comprising at least 2.5 grams of total dietary fiber per single serving of the pourable dressing composition, wherein said fiber is derived from whole natural high-fiber beans;
wherein the beans are subjected only to minimal enzymatic processing; and
wherein said food composition has a initial viscosity of about 3,000 to about 12,500 centipoise.

9. A method of producing a pourable dressing composition with at least 2.5 grams total fiber per single serving of the pourable dressing composition, comprising:
providing at least one whole fruit or vegetable;
treating the at least one whole fruit or vegetable using only minimal processing to create a minimally processed whole food; and
formulating the minimally processed whole food into a pourable composition,
wherein the total fiber is natural fiber derived from minimally processing at least one whole fruit or whole vegetable, wherein the whole fruit or whole vegetable, before minimally processing, contains at least about 25 percent fiber; wherein the whole fruit or whole vegetable, before minimally processing, is obtained in, or converted to, (1) a dehydrated form and (2) a powdered form having an average particle size of less than about 500 microns;
wherein the dehydrated and powdered form of the whole fruit or vegetable is minimally processed using an enzymatic treatment to reduce the initial viscosity without shear to less than about 12,500 cP;
wherein the enzymatically treated whole fruit or vegetable is incorporated into a pourable dressing base composition to form the pourable dressing composition containing at least 2.5 grams total fiber per single serving of the pourable dressing composition; and
wherein the initial viscosity of the pourable dressing composition containing the at least 2.5 grams total fiber per single serving of the pourable dressing composition is less than about 12500 cP.

10. The method of claim 9, wherein the at least one whole food is minimally processed by physical means as a precursor or adjunct to enzymatic or fermentative processing.

11. The method of claim 9 or claim 10, wherein the at least one whole food is minimally processed solely by enzymatic means.

12. The method of any of claims 9 to 11, wherein the least one whole food is minimally processed solely by fermentative means.

13. The method of any of claims 9 to 12, wherein the at least one whole fruit or vegetable is selected from the group consisting of beans, carrots, and broccoli.

14. The method of any of claims 9 to 12, wherein the at least one whole fruit or vegetable is selected from the group consisting of avocado and mango.

15. The method of any of claims 9 to 14, further comprising adding at least one of water, oil, spices, salt, sweetener, vinegar, and combinations thereof.
